# EUROPÄISCHE PATENTSCHRIFT

(11) **EP 2 477 488 B1**
(45) Veröffentlichungstag und Bekanntmachung des Hinweises auf die Patenterteilung: **17.06.2015**
(21) Anmeldenummer: 10751575.1
(22) Anmeldetag: 02.09.2010
(51) Int. Cl.: A01N 25/30, A01P 7/02, A01P 7/04, A01N 51/00, A01N 43/40, A01N 47/40

(54) **ALKYLPOLYPROPYLENGLYCOLPOLYETHYLENGLYCOL ENTHALTENDE AGROCHEMISCHE ZUSAMMENSETZUNGEN**
AGROCHEMICAL COMPOSITIONS CONTAINING ALKYL POLYPROPYLENE GLYCOL POLYETHYLENE GLYCOL
COMPOSITIONS AGROCHIMIQUES CONTENANT DE L'ALKYLPOLYPROPYLÈNE GLYCOL POLYÉTHYLÈNE GLYCOL

(30) Priorität: 14.09.2009 EP 09170160; 14.09.2009 US 242119 P
(43) Veröffentlichungstag der Anmeldung: 25.07.2012
(73) Patentinhaber: Bayer Intellectual Property GmbH, 40789 Monheim am Rhein (DE)
(72) Erfinder: STORK, Andreas, 40789 Monheim (DE); RECKMANN, Udo, 51063 Köln (DE); PONTZEN, Rolf, 42799 Leichlingen (DE)
(74) Vertreter: BIP Patents
(86) Internationale Anmeldenummer: PCT/EP2010/005396
(87) Internationale Veröffentlichungsnummer: WO 2011/029552

(56) Entgegenhaltungen:
- WO-A1-94/10839
- DE-A1-102006 015 467
- DE-A1-102006 033 572
- R. Zerrer: "Crop-News", Crop-News , 31. Januar 2004 (2004-01-31), Seiten 1-6, XP002566160, Gefunden im Internet: URL:http://www.clariant.com/C125691A003596 E5/vwLookupDownloads/Newsletter_APEreplace ment2004.pdf/$File/Newsletter_APEreplaceme nt2004.pdf [gefunden am 2010-01-25]

## Beschreibung

Die vorliegende Erfindung betrifft spezielle Alkylpolypropylenglycolpolyethylenglycol enthaltende agrochemische Zusammensetzungen, Verfahren zu deren Herstellung sowie die Verwendung entsprechender Zusammensetzungen im agrochemischen Bereich.

Es ist allgemein bekannt, dass viele agrochemische Wirkstoffe, insbesondere solche mit systemischer Wirkung, in die Pflanze penetrieren müssen, damit sie ihre Aktivität gleichmäßig in der ganzen Pflanze entfalten können. So muss bei der Wirkstoffaufnahme über die Blätter die Penetrationsbarriere der Cuticula von den Wirkstoffen überwunden werden. Außerdem ist es wichtig, dass die agrochemischen Wirkstoffe schnell und über eine möglichst große Oberfläche verteilt in die Pflanze eindringen, da sonst die Gefahr besteht, dass die aktiven Komponenten durch Regen abgewaschen werden.

Weiterhin ist allgemein bekannt, dass manche in Pflanzenschutzmitteln verwendeten Additive, wie zum Beispiel Tenside, Mineralöle und Pflanzenöle, das Eindringen agrochemischer Wirkstoffe in die Pflanze fördern und dadurch die Aktivität der Wirkstoffe steigern können. Die Additive können im Einzelfall die Benetzbarkeit verstärken, eine Haftung der Sprühnebeltröpfchen auf den Pflanzenoberflächen (= Retention) verbessern, eine bessere Verteilung des Spritzbelages auf der Oberfläche (= Spreitung) der Pflanze herbeiführen, die Verfügbarkeit des Wirkstoffes im eingetrockneten Spritzrückstand durch so genanntes Anlösen erhöhen oder direkt die Penetration des Wirkstoffes durch die Cuticula fördern. Die Additive werden dabei entweder direkt in die Formulierung eingebaut (was nur zu einem begrenzten Prozentsatz möglich ist), oder aber im Tankmixverfahren der jeweiligen Applikationsbrühe zugefügt.

Unabhängig von den vorgenannten Eigenschaften der Additive ist darüber hinaus wünschenswert, dass Additive vorteilhafte Eigenschaften bei der Bereitung der Applikationsbrühe aus einem Konzentrat aufweisen, also noch vor dem eigentlichen Ausbringen auf die Pflanze. Beispielsweise ist eine hohe Spontaneität beim Ansetzen der Applikationsbrühe wünschenswert, d. h. das Konzentrat soll sich beim Einbringen in beispielsweise Wasser rasch und ohne große äußere Hilfe gleichmäßig verteilen und ein Abscheiden von Kristallen oder öliger Stoffe soll ausbleiben.

Die Verwendung von Alkylpolypropylenglycolpolyethylenglycol-Verbindungen in agrochemischen Zusammensetzungen zum Erreichen unterschiedlicher Effekte ist aus dem Stand der Technik bekannt.

So offenbart beispielsweise die WO 2008/077921 A1 die Verwendung von einem Tensid zur Herstellung von Nanopartikeln wasserunlöslicher Wirkstoffe in agrochemischen Formulierungen. In den Formulierungen gemäß WO 2008/077921 A1 werden ausschließlich wasserunlösliche Wirkstoffe in Nanopartikelform formuliert. Die gemäß WO 2008/077921 A1 zu verwendenden Tenside sind vorzugsweise Blockcopolymere aus Ethylenoxideinheiten (C₂-Baustein) und Alkylenoxideinheiten mit 3 bis 10 Kohlenstoffatomen.

In diesem Stand der Technik werden weder wasserlösliche agrochemische Verbindungen verwendet, noch kann dem Stand der Technik ein Hinweis entnommen werden, wie die Penetration oder die Spontaneität agrochemischer Zusammensetzungen verbessert werden kann.

WO 03/090531 A1 beschreibt die Verwendung von bestimmten Alkoxylaten als Adjuvans für den agrochemischen Bereich. Bei den Alkoxylaten handelt es sich um solche, welchen einen verzweigten C₅ bis C₃₀-Alkoholteil aufweisen. Alkoxylate mit einem linearen Alkoholteil oder mit einem verzweigten Alkoholteil mit bis zu vier Kohlenstoffatomen werden in der WO 03/090531 A1 nicht verwendet.

WO 00/42847 A1 betrifft Zusammensetzungen, bestehend aus einer Biozid-Komponente und einer Adjuvans-Komponente, wobei die Adjuvans-Komponente mindestens ein Tensid aus der Gruppe spezieller Alkoxylate umfasst. Die in der WO 00/42847 A1 beschriebenen Alkoxylate basieren alle auf Alkoholeinheiten, welche mindestens 6 Kohlenstoffatome aufweisen.

WO 01/30147 A1 beschreibt Pestizidzusammensetzungen bzw. Wachstumsregulatoren für Pflanzen, Insekten bzw. Schädlinge, welche als Adjuvans unter anderem Alkoxylate umfassen. Die A1-koxylate umfassen einen endständigen Alkylteil, welcher auf höhere Homologe Alkohole, beispielsweise einem linearen C₁₂-C₁₄-Alkohol, zurückgehen. Alkoxylate auf Basis von niederhomologen Alkoholen sind aus der WO 01/30147 A1 nicht bekannt.

Auch die EP 0 356 812 A2 und die WO 01/030147 A1 offenbaren agrochemische Zusammensetzungen, welche Alkoxylate umfassen, die auf höherhomologen Alkohole basieren.

Diese aus dem Stand der Technik bekannten Alkoxylate auf Basis von höherhomologen Alkoholen sind sowohl hinsichtlich der Förderung der Penetration in die Pflanze als auch hinsichtlich der Förderung der Spontaneität verbesserungswürdig.

Die vorliegende Erfindung stellt sich daher ausgehend von dem zuvor dargestellten Stand der Technik die Aufgabe, weitere agrochemische Zubereitungen bereitzustellen.

In einer ersten Ausgestaltung sollen diese agrochemischen Zubereitungen bzw. die aus ihnen erzeugte Applikationsbrühe vorzugsweise eine verbesserte Penetration des enthaltenen agrochemischen Wirkstoffes in die Pflanzen bewirken.

In einer zweiten Ausgestaltung sollen diese agrochemischen Zubereitungen vorzugsweise eine verbesserte Spontaneität beim Einbringen in Wasser zur Erzeugung einer Applikationsbrühe haben.

In einer dritten Ausgestaltung sollen diese agrochemischen Zubereitungen bzw. die aus ihnen erzeugten Applikationsbrühen vorzugsweise gleichzeitig eine verbesserte Penetration des enthaltenen agrochemischen Wirkstoffes in die Pflanzen bewirken und eine verbesserte Spontaneität der Zubereitung beim Einbringen in Wasser zur Erzeugung einer Applikationsbrühe haben.

In einer vierten Ausgestaltung soll die verbesserte Spontaneität und/oder Penetration nicht zu einer gleichzeitigen Verschlechterung der übrigen Eigenschaften, insbesondere der Retention, führen.

Erfindungsgemäß wurde nun gefunden, dass eine Zusammensetzung, umfassend mindestens einen Wirkstoff ausgewählt aus der Gruppe bestehend aus Verbindung B und Verbindung A und mindestens eine Alkylpolypropylenglycolpolyethylenglycol-Verbindung der allgemeinen Formel (I)

R-O-(CₘH₂ₘO)ₓ-(CₙH₂ₙO)_{y}-R' (I)

in welchen die einzelnen Reste und Indizes die folgenden Bedeutungen aufweisen:
- R und R': unabhängig voneinander für Wasserstoff, einen linearen C₁- bis C₅-Alkylrest oder einen verzweigten C₃- oder C₄-Alkylrest stehen;
- m: gleich 2 oder 3 ist;
- n: gleich 2 oder 3 ist;
- x: gleich 5 bis 150 ist; und
- y: gleich 5 bis 150 ist,
wobei ein Rest n oder m die Bedeutung 2 und der andere Rest n oder m die Bedeutung 3 aufweist, die technische Aufgabe lösen.

Gegenstand der vorliegenden Erfindung ist daher zunächst eine Zusammensetzung, umfassend mindestens einen Wirkstoff ausgewählt aus der Gruppe bestehend aus Verbindung B und Verbindung A und mindestens eine Alkylpolypropylenglycolpolyethylenglycol-Verbindung der allgemeinen Formel (I)

R-O-(CₘH₂ₘO)ₓ-(CₙH₂ₙO)_{y}-R' (I)

in welchen die einzelnen Reste und Indizes die folgenden Bedeutungen aufweisen:
- R und R': unabhängig voneinander für Wasserstoff, einen linearen C₁- bis C₅-Alkylrest oder einen verzweigten C₃- oder C₄-Alkylrest stehen;
- m: gleich 2 oder 3 ist;
- n: gleich 2 oder 3 ist;
- x: gleich 5 bis 150 ist; und
- y: gleich 5 bis 150 ist,
wobei ein Rest n oder m die Bedeutung 2 und der andere Rest n oder m die Bedeutung 3 aufweist.

Unter einem linearen C₁- bis C₅-Alkylrest versteht man im Rahmen der vorliegenden Erfindung einen Methyl-, einen Ethyl-, einen n-Propyl-, einen n-Butyl oder einen n-Pentylrest.

Unter einem verzweigten C₃- oder C₄-Alkylrest versteht man im Rahmen der vorliegenden Erfindung einen Isopropyl-, einen Isobutyl- oder einen Tertiärbutylrest.

In einer bevorzugten Ausführungsform werden die Reste R und R' unabhängig voneinander ausgewählt aus der Gruppe, bestehend aus einem Methylrest, einem n-Butylrest und Wasserstoff.

In einer noch bevorzugteren Ausführungsform werden die Reste R und R' unabhängig voneinander ausgewählt aus der Gruppe, bestehend aus einem n-Butylrest und Wasserstoff.

Im Hinblick auf die Anordnung der Polyethylen- und Polypropyleneinheiten kann
(a) entweder m den Wert 2 und n den Wert 3;
(b) oder m den Wert 3 und n den Wert 2
annehmen. Bevorzugt ist die Ausgestaltung (b) mit m gleich 3 und n gleich 2.

Ganz besonders bevorzugt sind Alkylpolypropylenglycolpolyethylenglycol-Verbindungen der Formel (I), in welcher
- m: 3 ist,
- n: 2 ist,
- x: für 5 bis 80 steht,
- y: für 5 bis 80 steht,
- R: n-Butyl oder Wasserstoff und
- R': Wasserstoff ist.

Es wurde herausgefunden, dass entsprechende Zusammensetzungen im Allgemeinen penetrationsfördernde Eigenschaften für wasserlösliche agrochemische Wirkstoffe aufweisen.

Es wurde des Weiteren herausgefunden, dass entsprechende Zusammensetzungen im Allgemeinen die Spontaneität beim Ansetzen der Applikationsbrühe aus dem Konzentrat steigern.

Es wurde des Weiteren herausgefunden, dass entsprechende Zusammensetzungen im Allgemeinen penetrationsfördernde Eigenschaften für wasserlösliche agrochemische Wirkstoffe aufweisen und die Spontaneität beim Ansetzen der Applikationsbrühe aus dem Konzentrat steigern.

Im Rahmen der vorliegenden Offenbarung wird unter dem Begriff eines "wasserlöslichen agrochemischen Wirkstoffs" im Allgemeinen ein insektizider und/oder akarizider (d.h. ein Insekten und/oder Acarina bekämpfender) Wirkstoff verstanden, welcher eine Löslichkeit von ≥ 10 mg/L (bei 20 °C) in Wasser aufweist. Die Verbindungen A und B erfüllen diese Anforderung.

Geeignete agrochemische Wirkstoffe, welche in der Zusammensetzung gemäß der vorliegenden Offenbarung verwendet werden können, sind folgende Wirkstoffe:

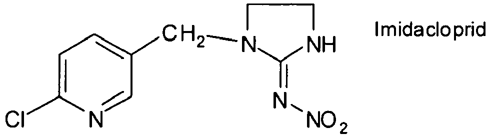

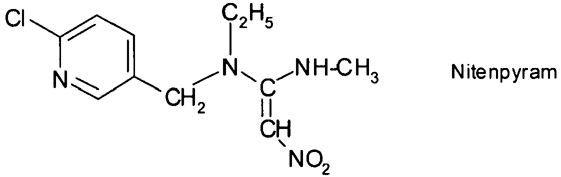

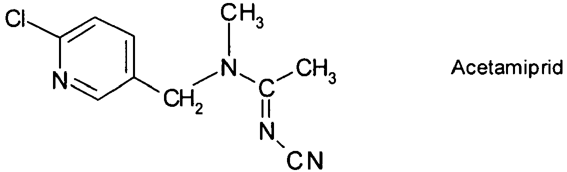

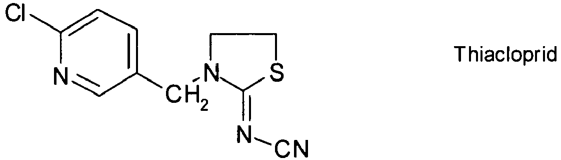

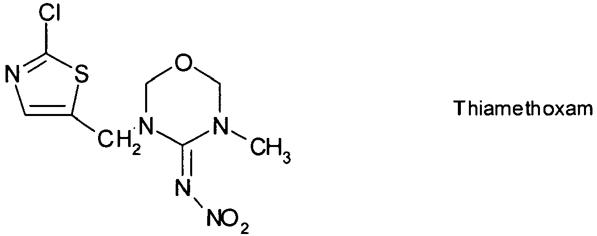

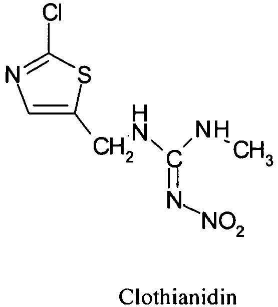

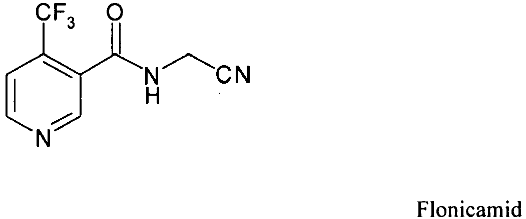

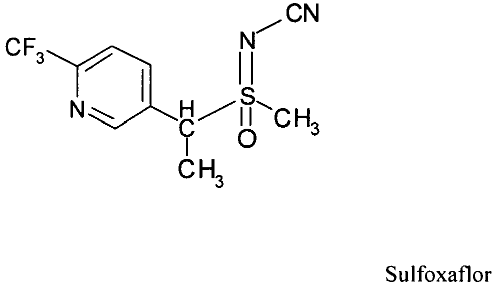

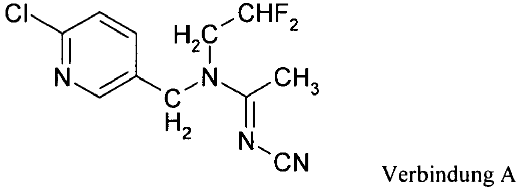

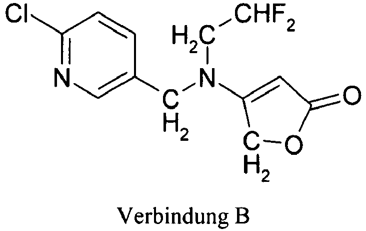

Die zuvor genannten Stoffe und deren Einsatz im agrochemischen Bereich, beispielsweise als Insektizid, sind bekannt. Verbindung A ist bekannt aus WO 2008/009360 und Verbindung B aus WO 2007/115644. bekannt.

Als weitere Insektizide bzw. Akarizide, welche neben den zuvor genannten agrochemischen Wirkstoffen zusätzlich in der erfindungsgemäßen Zusammensetzung enthalten sein können, kommen beispielsweise Wirkstoffe aus der Gruppe der Pyrethroide, der Phthalsäurediamide (Flubendiamide), Anthranildiamide (Cyazypyr, Rynaxypyr) oder der Ketoenol-Derivate in Frage. Beispielhaft genannt seien
Cypermethrin,
Deltamethrin,
Permethrin,
Transfluthrin,
natürliches Pyrethrum,
Fenpropathrin,
Cyfluthrin,
ß-Cyfluthrin sowie
aus der Gruppe der Ketoenol-Derivate das Spirodiclofen, das Spiromesifen und das Spirotetramat. Diese weiteren Insektizide bzw. Akarizide, welche als Mischungspartner mit dem mindestens einen agrochemischen Wirkstoff in der erfindungsgemäßen Zusammensetzung enthalten sein können, können sowohl wasserlöslich als auch wasserunlöslich sein.

Als Fungizide, welche neben den zuvor genannten agrochemischen Wirkstoffen zusätzlich in der erfindungsgemäßen Zusammensetzung enthalten sein können, kommen Wirkstoffe beispielsweise aus der Gruppe der Azole, der Strobilurin-Derivate und der Aminosäure-Derivate in Betracht. Beispielhaft genannt seien
Prothioconazole,
Tebuconazole,
Cyproconazole,
Propiconazole,
Triadimenol,
Myclobutanil,
Trifloxystrobin,
Azoxystrobin,
Kresoxim-methyl,
Pyraclostrobin,
Fluoxystrobin,
Iprovalicarb,
Fluopicolide,
Bixafen und
Fluopyram.

Die zuvor genannten agrochemischen Wirkstoffe sind dem Fachmann an sich bekannt (vgl. Pesticide Manual; British Crop Protection Council; Auflage: 14 (30. November 2006)).

Diese weiteren Fungizide, welche als Mischungspartner in der erfindungsgemäßen Zusammensetzung enthalten sein können, können sowohl wasserlöslich als auch wasserunlöslich sein.

In einer weiteren Ausgestaltung der vorliegenden Offenbarung Erfindung umfasst die Zusammensetzung im Allgemeinen zwischen 1 und 50 Gew.-%, weiter bevorzugt 5 bis 40 Gew.-%, besonders bevorzugt 10 bis 25 Gew.-%, jeweils bezogen auf die gesamte Zusammensetzung, an dem wasserlöslichen agrochemischen Wirkstoff.

Die Alkylpolypropylenglycolpolyethylenglycol-Verbindung der allgemeinen Formel (I) wird in der erfindungsgemäßem Zusammensetzung vorzugsweise in einer Konzentrationen zwischen 0,1 und 80 Gew.-%, weiter bevorzugt 0,5 und 60 Gew.-%, besonders bevorzugt 5 bis 45 Gew.-%, jeweils bezogen auf die gesamte Zusammensetzung, verwendet.

In einer weiteren Ausgestaltung der vorliegenden Offenbarung liegt das Gewichtsverhältnis von dem wasserlöslichen agrochemischen Wirkstoff zu der Alkylpolypropylenglycolpolyethylenglycol-Verbindung der allgemeinen Formel (I) im Allgemeinen zwischen 1 : 0,1 und 1 : 6, weiter bevorzugt zwischen 1 : 0,2 und 1 : 4, besonders bevorzugt zwischen 1 : 0,5 bis 1 : 2,5.. Wenn in der vorliegenden Offenbarung das Gewichtsverhältnis von dem wasserlöslichen agrochemischen Wirkstoff zu der Alkylpolypropylenglycolpolyethylenglycol-Verbindung der allgemeinen Formel (I) in dem zuvor bezeichneten Bereich liegt, wird eine bevorzugte Balance zwischen der Wirkung der Alkylpolypropylenglycolpolyethylenglycol-Verbindung der allgemeinen Formel (I) und den mit der Verwendung dieser Verbindung verursachten Kosten erreicht.

Die Verwendung von Alkylpolypropylenglycolpolyethylenglycol-Verbindungen der allgemeinen Formel (I) weist eine Reihe von Vorteilen auf. So handelt es sich bei diesen Alkylpolypropylenglycolpolyethylenglycol-Verbindungen um Produkte, die problemlos zu handhaben und auch in größeren Mengen verfügbar sind. Außerdem sind sie biologisch abbaubar und ermöglichen eine deutliche Effektivitätssteigerung bei der Applikation von wasserlöslichen agrochemischen Wirkstoffen gegen Insekten bzw. Acarina bzw. bei der damit verbundenen Vektorkontrolle und/oder eine signifikante Verbesserung der Spontaneität.

Entsprechende Alkylpolypropylenglycolpolyethylenglycole sind kommerziell erhältlich und werden unter anderem unter den Bezeichnungen Antarox^{®} B/848, Antarox^{®} B/500, Emulsogen^{®} 3510, Emulsogen^{®} EP 4901, Emulsogen^{®} V 1816 oder Genapol^{®} PF 40 vertrieben.

Die verwendbaren Alkylpolypropylenglycolpolyethylenglycol-Verbindungen sind durch die allgemeine Formel (I) allgemein definiert. Bei diesen Alkylpolypropylenglycolpolyethylenglycol-Verbindungen handelt es sich im Allgemeinen um Gemische von Stoffen dieses Typs mit unterschiedlichen Kettenlängen. Für die Indices x und y errechnen sich deshalb Durchschnittswerte in den zuvor definierten Bereichen, die auch von ganzen Zahlen abweichen können. Auch Gemische der unter der allgemeinen Formel (I) definierten Alkylpolypropylenglycolpolyethylenglycol-Verbindungen, beispielsweise von zwei, drei, vier oder fünf unterschiedlichen Alkylpolypropylenglycolpolyethylenglycol-Verbindungen, sind im Rahmen der vorliegenden Erfindung einsetzbar. Wenn im Rahmen der vorliegenden Erfindung Gemische von mehreren Alkylpolypropylenglycolpolyethylenglycol-Verbindungen eingesetzt werden, kann beispielsweise eine Alkylpolypropylenglycolpolyethylenglycol-Verbindung so ausgewählt werden, dass die Penetration des agrochemischen Wirkstoffes optimiert wird, und die andere Alkylpolypropylenglycolpolyethylenglycol-Verbindung kann so ausgewählt werden, dass die Spontaneität des agrochemischen Wirkstoffes optimiert wird.

Des Weiteren kann die erfindungsgemäße Zusammensetzung im Allgemeinen zwischen 1 und 90 Gew.-%, weiter bevorzugt 15 bis 75 Gew.-%, besonders bevorzugt 30 bis 60 Gew.-%, jeweils bezogen auf die Zusammensetzung, an einem oder mehreren Lösemittel enthalten.

Geeignete Lösemittel, welche im Rahmen der vorliegenden Erfindung verwendet werden können, sind vorzugsweise wasserlösliche und/oder wassermischbare Lösemittel. Entsprechende Beispiele für geeignete Lösemittel sind γ-Butyrolacton, Dimethylisosorbid, Dimethylsulfoxid (DMSO), Propylenglycol, Propylencarbonat, Benzylalkohol, Dimethylamide, kurzkettige Alkohole, insbesondere Ethanol, n-Propanol, Isopranol, n-Butanol, Isobutanol und tert.-Butanol, N-Methyl-2-pyrrolidon (NMP), Polyethylenglycol, Methoxy-2-propanol, Triethylenglycoldiacetat und Wasser.

Weitere optionale Bestandteile in der erfindungsgemäßen Zusammensetzung sind beispielsweise Zusatzstoffe in Mengen im Allgemeinen zwischen 0 und 30 Gew.-%, weiter bevorzugt 0 bis 20 Gew.-%, besonders bevorzugt 0 bis 10 Gew.-%. Als Zusatzstoffe, die in den erfindungsgemäßen Pflanzenbehandlungsmitteln enthalten sein können, versteht man weitere agrochemische Wirkstoffe sowie Kristallisationsinhibitoren, Netzmittel, Emulgatoren und Wasser.

Als Kristallisationsinhibitoren, die in den erfindungsgemäßen Zusammensetzungen vorhanden sein können, kommen alle üblicherweise für derartige Zwecke in agrochemischen Mitteln einsetzbaren Stoffe in Frage. Vorzugsweise genannt seien N-Alkyl-pyrrolidone, wie N-Octyl-pyrrolidon und N-Dodecylpyrrolidon, ferner Co-Polymerisate von Polyvinylpyrrolidon und Polyvinylalkohol, wie zum Beispiel das unter der Bezeichnung Luviskol VA 64 (Fa. BASF) bekannte Polyvinylpyrrolidon / Polyvinylalkohol-Copolymerisat, weiterhin Alkylcarbonsäure-dimethylamide, wie Decansäure-dimethylamid oder das unter der Bezeichnung Hallcomid^{®} (Fa. Hall Comp.) bekannte C₆₋₁₂-Alkancarbonsäure-dimethylamid-Gemisch, und außerdem Co-Polymerisate von Ethylendiamin mit Ethylenoxid und Propylenoxid, wie zum Beispiel das unter der Bezeichnung Synperonic T 304 (Fa. Uniqema) bekannte Produkt.

Als Netzmittel kommen alle üblichen für derartige Zwecke in Pflanzenbehandlungsmitteln einsetzbaren Stoffe in Betracht. Vorzugsweise genannt seien Alkylphenolethoxylate, Alkylnaphthalinsulfonate, Dialkylsulfosuccinate, wie Dioctylsulfosuccinat-Natrium, Laurylethersulfate und Polyoxyethylensorbitan-Fettsäureester.

Die erfindungsgemäß einzusetzenden Alkylpolypropylenglycolpolyethylenglycol-Verbindungen, welche zur Verbesserung der Penetration bzw. zur Verbesserung der Spontaneität eingesetzt werden, weisen selbst Emulgatoreigenschaften auf. Trotzdem kann im Rahmen der vorliegenden Erfindung ein weiterer Emulgator optional in der erfindungsgemäßen Zusammensetzung eingesetzt werden.

Als Emulgatoren kommen dann alle üblichen nichtionogenen, anionischen, kationischen und zwitterionischen Stoffe mit oberflächenaktiven Eigenschaften in Frage, die üblicherweise in agrochemischen Mitteln eingesetzt werden. Zu diesen Stoffen gehören Umsetzungsprodukte von Fettsäuren, Fettsäureestern, Fettalkoholen, Fettaminen, Alkylphenolen oder Alkylarylphenolen mit Ethylenoxid und/oder Propylenoxid und/oder Butylenoxid, sowie deren Schwefelsäureester, Phosphorsäure-mono-ester und Phosphorsäure-di-ester, ferner Umsetzungsprodukte von Ethylenoxid mit Propylenoxid, weiterhin Alkylsulfonate, Alkylsulfate, Arylsulfate, Tetra-alkyl-ammoniumhalogenide, Trialkylaryl-ammoniumhalogenide und Alkylamin-sulfonate. Die Emulgatoren können einzeln oder auch in Mischung eingesetzt werden. Vorzugsweise genannt seien Umsetzungsprodukte von Rizinusöl mit Ethylenoxid im Molverhältnis 1:20 bis 1:60, Umsetzungsprodukte von C₆-C₂₀-Alkoholen mit Ethylenoxid im Molverhältnis 1:5 bis 1:50, Umsetzungsprodukte von Fettaminen mit Ethylenoxid im Molverhältnis 1:2 bis 1:25, Umsetzungsprodukte von 1 Mol Phenol mit 2 bis 3 Mol Styrol und 10 bis 50 Mol Ethylenoxid, Umsetzungsprodukte von C₈-C₁₂-Alkylphenolen mit Ethylenoxid im Molverhältnis 1:5 bis 1:30, Alkylglykoside, C₈-C₁₆-Alkylbenzolsulfonsäuresalze, wie z.B. Calcium-, Monoethanolammonium-, Di-ethanolammonium- und Triethanolammonium-Salze.

Als Beispiele für nicht-ionische Emulgatoren seien die unter den Bezeichnungen Pluronic PE 10 100 (Fa. BASF) und Atlox 4913 (Fa. Uniqema) bekannten Produkte genannt. Ferner infrage kommen Tristyryl-phenyl-ethoxylate. Als Beispiele für anionische Emulgatoren seien das unter der Bezeichnung Baykanol SL (= Kondensationsprodukt von sulfoniertem Ditolylether mit Formaldehyd) im Handel befindliche Produkt genannt sowie phosphatierte oder sulfatierte Tristyryl-phenolethoxylate, wobei Soprophor FLK und Soprophor 4D 384 (Fa. Rhodia) speziell genannt seien.

In den Pflanzenbehandlungsmitteln kann der Gehalt an den einzelnen Komponenten innerhalb eines bestimmten Bereiches variiert werden. Bevorzugt sind diejenigen Pflanzenbehandlungsmittel, in denen die Konzentrationen
- an Alkylpolypropylenglycolpolyethylenglycol-Verbindungen der allgemeinen Formel (I) zwischen 0,1 und 80 Gew.-%;
- an agrochemischen Wirkstoff zwischen 1 und 50 Gew.-%;
- an Lösemitteln zwischen 1 und 90 Gew.-% und
- an Zusatzstoffen zwischen 0 und 30 Gew.-%
betragen.

Die vorliegende Erfindung betrifft ferner die Herstellung der erfindungsgemäßen Zusammensetzung. Die Herstellung der erfindungsgemäßen Pflanzenbehandlungsmittel erfolgt dabei im Allgemeinen in der Weise, dass man die einzelnen Komponenten in den jeweils gewünschten Verhältnissen miteinander vermischt. Im allgemeinen geht man so vor, dass man einen agrochemischen Wirkstoff vorlegt und dann unter Rühren die übrigen Bestandteile in beliebiger Reihenfolge hinzufügt.

Die Temperaturen können bei der Herstellung der erfindungsgemäßen Zusammensetzung in einem bestimmten Bereich variiert werden. Man arbeitet im Allgemeinen bei Temperaturen zwischen 10 und 70 °C, vorzugsweise bei Raumtemperatur.

Für die Herstellung der erfindungsgemäßen Zusammensetzung kommen übliche Geräte in Betracht, die zur Zubereitung von agrochemischen Formulierungen eingesetzt werden.

Die erfindungsgemäßen Zusammensetzungen können entweder als solche oder nach vorherigem Verdünnen mit Wasser oder anderen Verdünnungsmitteln ausgebracht werden, also zum Beispiel als Emulsionen, Suspensionen, Lösungen oder Aerosole. In dem Fall der unmittelbaren Anwendung wird durch die erfindungsgemäße Zusammensetzung zumindest die Penetration des agrochemischen Wirkstoffes verbessert.

In einer besonders bevorzugten Form liegt die erfindungsgemäße Zusammensetzung in der Form eines Konzentrats vor, welche vor der eigentlichen Anwendung mit einem Lösemittel, insbesondere Wasser, verdünnt wird. In dem Fall wird durch die erfindungsgemäße Zusammensetzung die Penetration des agrochemischen Wirkstoffes und/oder die Spontaneität der Zubereitung beim Ansetzen der Applikationsbrühe verbessert.

Die vorliegende Erfindung betrifft darüber hinaus auch die Verwendung entsprechender Zusammensetzungen im agrochemischen Bereich. Insbesondere betrifft die vorliegende Erfindung die Verwendung der erfindungsgemäßen Zusammensetzungen zum Bekämpfen von Insekten und/oder Acarina. Im Rahmen der erfindungsgemäßen Verwendung wird die erfindungsgemäße Zusammensetzung im Allgemeinen zunächst in eine wässrige Phase eingetragen, welche dann zur Anwendung gelangt.

Die Anwendung erfolgt dabei nach üblichen Methoden, also zum Beispiel durch Spritzen, Gießen, Sprühen, Injizieren oder Streichen.

Die Aufwandmenge an den erfindungsgemäßen Pflanzenbehandlungsmitteln kann innerhalb eines größeren Bereiches variiert werden. Sie richtet sich nach den jeweils enthaltenen Wirkstoffen und nach deren Konzentration in den Formulierungen.

Mit Hilfe der erfindungsgemäßen Pflanzenbehandlungsmittel lassen sich wasserlösliche insektizide und/oder akarizide Wirkstoffe in besonders vorteilhafter Weise auf die Pflanzen und/oder deren Lebensraum ausbringen. Dabei wird das Penetrationsvermögen der Wirkstoffe begünstigt, die biologische Wirksamkeit der aktiven Komponenten im Vergleich zu herkömmlichen Formulierungen gesteigert oder/und die Spontaneität der Produkte beim Einbringen in Wasser verbessert.

Es wurde herausgefunden, dass entsprechende Zusammensetzungen im Allgemeinen penetrationsfördernde Eigenschaften für wasserlösliche agrochemische Wirkstoffe aufweisen.

Es wurde des Weiteren herausgefunden, das entsprechende Zusammensetzungen im Allgemeinen die Spontaneität beim Ansetzen der Applikationsbrühe aus dem Konzentrat steigern. Es wurde

Es wurde des Weiteren herausgefunden, das entsprechende Zusammensetzungen im Allgemeinen penetrationsfördernde Eigenschaften für wasserlösliche agrochemische Wirkstoffe aufweisen und die Spontaneität beim Ansetzen der Applikationsbrühe aus dem Konzentrat steigern.

Hinsichtlich weiterer Ausgestaltungen der erfindungsgemäßen Verwendung wird aus obige Ausführungen verwiesen.

Die Erfindung wird durch die folgenden Beispiele veranschaulicht.

### Herstellungsbeispiele

### Allgemeines Beispiel

Zur Herstellung einer Formulierung werden

| | |
|---|---|
| 17g | Wirkstoff |

unter Rühren bei Raumtemperatur nacheinander mit

| | |
|---|---|
| 20 - 40 g | Alkylpolypropylenglycolpolyethylenglycol-Verbindung der Formel (I) (die genaue Menge an Additiv ist in Tabelle 1 angegeben), |
| 43 - 63 g | Lösemittel (genaue Menge wird an die Menge von Alkylpolypropylenglycolpolyethylenglycol-Verbindung der Formel (I) angepasst) sowie |
| 25 mg | Entschäumer |

versetzt. Nach beendeter Zugabe wird noch bei Raumtemperatur nachgerührt bis eine transparente Lösung entstanden ist. Man erhält auf diese Weise eine homogene Flüssigkeit.

### Vergleichsbeispiel A

Zur Herstellung einer Formulierung werden

| | |
|---|---|
| 17g | Verbindung B |

unter Rühren bei Raumtemperatur nacheinander mit

| | |
|---|---|
| 40 g | Emulgator KS (Struktur: [RCOO(EO)_{x/y/z}][CH(CH₂)₂]), |
| 43 g | Lösemittel (z. B. Propylencarbonat, 1-Methoxy-2-propanol, Benzylalkohol, etc.) sowie |
| 25 mg | Entschäumer |

versetzt. Nach beendeter Zugabe wird noch 5 Minuten bei Raumtemperatur nachgerührt. Man erhält auf diese Weise eine homogene Flüssigkeit.

### Vergleichsbeispiel B

Zur Herstellung einer Formulierung werden

| | |
|---|---|
| 17 g | Verbindung B |

unter Rühren bei Raumtemperatur nacheinander mit

| | |
|---|---|
| 40 g | Emulgator Agnique 3551 (Struktur: 1-Et-Hex-O-(PO)ₓ-(EO)_{y}-H) |
| 43 g | Lösemittel (z. B. Propylencarbonat, 1-Methoxy-2-propanol, Benzylalkohol, etc.) sowie |
| 25 mg | Entschäumer |

versetzt. Nach beendeter Zugabe wird noch 5 Minuten bei Raumtemperatur nachgerührt. Man erhält auf diese Weise eine homogene Flüssigkeit.

### Vergleichsbeispiel C

Zur Herstellung einer Formulierung werden

| | |
|---|---|
| 17 g | Verbindung B |

unter Rühren bei Raumtemperatur nacheinander mit

| | |
|---|---|
| 40 g | Emulgator Agnique KE 3552 (Struktur: n-Octyl-O-(PO)ₓ-(EO)_{y}-H) |
| 43 g | Lösemittel (z. B. Propylencarbonat, 1-Methoxy-2-propanol, Benzylalkohol, etc.) sowie |
| 25 mg | Entschäumer |

versetzt. Nach beendeter Zugabe wird noch 5 Minuten bei Raumtemperatur nachgerührt. Man erhält auf diese Weise eine homogene Flüssigkeit.

### Vergleichsbeispiel D

Zur Herstellung einer Formulierung werden

| | |
|---|---|
| 17g | Verbindung B |

unter Rühren bei Raumtemperatur nacheinander mit

| | |
|---|---|
| 40 g | Emulsogen ITA 200 (Struktur: Iso-C₁₃H₂₇- O-(PO)ₓ-(EO)_{y}-H) |
| 43 g | Lösemittel (z. B. Propylencarbonat, 1-Methoxy-2-propanol, Benzylalkohol, etc.) sowie |
| 25 mg | Entschäumer |

versetzt. Nach beendeter Zugabe wird noch 5 Minuten bei Raumtemperatur nachgerührt. Man erhält auf diese Weise eine homogene Flüssigkeit.

### Vergleichsbeispiel E

Zur Herstellung einer Formulierung werden

| | |
|---|---|
| 8.5 g | Flonicamid oder Sulfoxaflor |

unter Rühren bei Raumtemperatur nacheinander mit

| | |
|---|---|
| 30 g | Antarox B/848 (Struktur: n-Bu-O-(PO)_{X}-(EO)_{y}-H) |
| 43 g | Lösemittel (z. B. NMP, Butyrolacton, Dimethylimidazolinon, etc.) sowie |
| 25 mg | Entschäumer |

versetzt. Nach beendeter Zugabe wird noch 5 Minuten bei Raumtemperatur nachgerührt. Man erhält auf diese Weise eine homogene Flüssigkeit.

### Verwendungsbeispiel I

### Bestimmung der Spontanität einer Formulierung gemäß obiger Rezeptur.

Ein 100 mL-Standzylinder aus Glas mit mL-Skalierung (Durchmesser ca. 3 cm, Höhe ca. 25 cm) und Schliffhals wird bis zur 100 mL-Markierung mit Wasser (CIPAC C) gefüllt und auf die jeweilige Temperatur temperiert. Zum eigentlichen Test gibt man 1.0 mL der Formulierung 1 cm oberhalb des Wasserspiegels tropfenweise in das Wasser und beobachtet das Verhalten beim Eintauchen und Absinken. Fallen die Tropfen zum Boden durch, so ist die Spontaneität mangelhaft, lösen sich die Tropfen jedoch innerhalb der ersten Fallstrecke, d.h. innerhalb weniger cm, auf, so ist die Spontaneität sehr gut. In Fällen, in denen keine vollständige Auflösung beim Einbringen in Wasser erfolgt, wird der Zylinder mit einem Stopfen verschlossen und bis zu dreimal umgekehrt, um eine Durchmischung zu erreichen. Die resultierende Mischung wird auf Phasentrennung (kristalline oder ölige Phasen) untersucht.

Die Ergebnisse solcher Spontaneitätstests sind in Tabelle I zusammengefasst. Bemerkenswert ist insbesondere der Befund, dass die Spontaneitäten der Versuchreihe 2 (mit Emulgatoren, die u.a. unter das oben angegebene Patent WO 03/090531 A1 fallen) ungenügend sind, während die analogen Formulierungen mit Antarox B/848 (Fa. Rhodia, Versuch 1a bis 1c) bzw. Antarox B/500 (Fa. Rhodia, Versuche 1d und le) bzw. Emulsogen 3510 (Fa. Clariant; Versuche 1f und 1g) bzw. Emulsogen EP 4901 (Fa. Clariant; Versuch 1h bis 1i) gute Spontaneitäten zeigen. Diese Additive fallen unter die Definition der erfindungsgemäß zu verwendenden Additive.

Auch Mischungen von Antarox B/848 und Emulsogen 3510 oder Emulsogen EP 4901 weisen gute Spontaneitäten auf (Beispiele 11 bis 1q). Darüber hinaus zeigen die Versuche 3a bis 3c unter Verwendung des Emulgators Agnique KE 3552 (Fa. Cognis) im Vergleich zu den Versuchen 2a bis 2c (Emulgator Agnique KE 3551, Fa. Cognis), dass eine lineare endständige Octylgruppe gegenüber einer verzweigten praktisch keine Verbesserung der Spontaneität bringt. Demnach ist nicht die Verzweigung, sondern die Kettenlänge der endständigen Alkylgruppe entscheidend und kurze Alkylgruppen (oder Wasserstoff) bringen Vorteile in Bezug auf die Spontaneitätseigenschaften.

Dieser Befund ist insofern höchst überraschend, da die Alkylketten am lipophilen (PO-)Ende des Emulgators positioniert sind und trotz ihrer Kürze im Vergleich zum viel längern lipophilen (PO)-Teil die Emulgatoreigenschaften ganz wesentlich beeinflussen.

### Tabelle I: Ergebnisse der Spontaneitätstests

### Formulierungen der Verbindung B mit Propylencarbonat, Benzylalkohol oder Butyrolacton als Lösemittel

**Tabelle I: Formulierungen (SL-200) von Verbindung B mit Propylencarbonat als Lösemittel**

| | **Emulgator** | | **SPONTANEITÄT *** | | |
|---|---|---|---|---|---|
| **No.** | **Konzentration, Name** | **Struktur** | **10 °C** | **RT (20 °C)** | **30 °C** |
| 1a | 40 % Antarox B/848 erfindungsgemäß | nBu-O-(PO)ₓ-(EO)_{y}-H | 3.5 | 3 | 3 |
| 1b | 30 % Antarox B/848 erfindungsgemäß | nBu-O-(PO)ₓ-(EO)_{y}-H | 3.5 | 2 | 1.5 |
| 1c | 20 % Antarox B/848 Erfindungsgemäß | nBu-O-(PO)ₓ-(EO)_{y}-H | 4 (PT) | 2.5 | 2 |
| 1d | 40 % Antarox B/500 Erfindungsgemäß | nBu-O-(PO)ₓ-(EO)_{y}-H | 3 | 2.5 | 2.5 |
| 1e | 30 % Antarox B/500 Erfindungsgemäß | nBu-O-(PO)ₓ-(EO)_{y}-H | 3 | 2 | 2 |
| 5a | 30 % Witconol NS 500 K (Ethylan NS 500 LQ) Erfindungsgemäß | nBu-O-(PO)ₓ-(EO)_{y}-H | | 1 | |
| 5b | 10 % Witconol NS 500 K (Ethylan NS 500 LQ) Erfindungsgemäß | nBu-O-(PO)ₓ-(EO)_{y}-H | | 4 (PT) | |
| 5c | 30 % Atlas G 5000 Erfindungsgemäß | nBu-O-(PO)ₓ-(EO)_{y}-H | | 2 | |
| 5d | 10 % Atlas G 5000 Erfindungsgemäß | nBu-O-(PO)ₓ-(EO)_{y}-H | | 2 (PT) | |
| 5e | 30 % Pluronic PE 10500 (Ethylan 324) | H-(EO)_{w}-(PO)ₓ-(EO)_{y}-H | | 5 (PT) | |
| 1f | 40% Emulsogen 3510 Erfindungsgemäß | nBu-O-(PO)ₓ-(EO)_{y}-H | 2.5 | 3 | 3.5 |
| 1g | 20% Emulsogen 3510 Erfindungsgemäß | nBu-O-(PO)ₓ-(EO)_{y}-H | 4 (PT) | 2.5 | 2.5 |
| 1h | 40% Emulsogen EP 4901 Erfindungsgemäß | nBu-O-(PO)ₓ-(EO)_{y}-H | 4 (PT) | 3 | 3 |
| 1i | 40% Emulsogen V 1816 Erfindungsgemäß | HO-(PO)ₓ-(EO)_{y}-H | 3.5 (PT) | 3 | 4 |
| 1j | 20 % Antarox B/848, 10 % Emulsogen V 1816 Erfindungsgemäß | nBu-O-(PO)ₓ-(EO)_{y}-H, HO-(PO)ₓ-(EO)_{y}-H | 3.5 | 3 | 2.5 |
| 1k | 15 % Antarox B/848, 15 % Emulsogen V 1816 Erfindungsgemäß | nBu-O-(PO)ₙ-(EO)ₘ-H, HO-(PO)ₓ-(EO)_{y}-H | 4 | 3 | 2.5 |
| 1l | 20 % Antarox B/848, 10 % Emulsogen 3510 Erfindungsgemäß | nBu-O-(PO)ₓ-(EO)_{y}-H, nBu-O-(PO)ₓ-(EO)_{y}-H | 2.5 (PT) | 2.5 | 2 |
| 1m | 15 % Antarox B/848, 15 % Emulsogen 3510 Erfindungsgemäß | nBu-O-(PO)ₓ-(EO)_{y}-H, nBu-O-(PO)ₓ-(EO)_{y}-H | 2.5 | 2 | 1.5 |
| 1n | 10 % Antarox B/848, 20 % Emulsogen 3510 Erfindungsgemäß | nBu-O-(PO)ₓ-(EO)_{y}-H, nBu-O-(PO)ₓ-(EO)_{y}-H | 2.5 | 2 | 1.5 |
| 1o | 20 % Antarox B/848, 10 % Emulsogen EP 4901 Erfindungsgemäß | nBu-O-(PO)ₓ-(EO)_{y}-H, nBu-O-(PO)ₓ-(EO)ₘ-H | 3 (PT) | 2 | 2 |
| 1p | 15 % Antarox B/848, 15 % Emulsogen EP 4901 Erfindungsgemäß | nBu-O-(PO)ₓ-(EO)_{y}-H, nBu-O-(PO)ₓ-(EO)_{y}-H | 2.5 (PT) | 2.5 (PT) | 2 |
| | | | | | |
| 1q | 10 % Antarox B/848, 20 % Emulsogen EP 4901 Erfindungsgemäß | nBu-O-(PO)ₓ-(EO)_{y}-H, nBu-O-(PO)ₓ-(EO)_{y}-H | 3 (PT) | 2.5 | 2 |
| 2a | 40 % Agnique 3551 Vergleich | Et-Hex-O-(PO)ₓ-(EO)_{y}-H | 6 (PT) | 6 (PT) | 6 (PT) |
| 2b | 30 % Agnique 3551 Vergleich | Et-Hex-O-(PO)ₓ-(EO)_{y}-H | 6 (PT) | 3 (PT) | 3 (PT) |
| 2c | 20 % Agnique 3551 Vergleich | Et-Hex-O-(PO)ₓ-(EO)_{y}-H | 6 (PT) | 3 (PT) | 3 (PT) |
| 2d | 40% Emulsogen ITA 200 Vergleich | Iso-C₁₃H₂₇-O-(PO)ₓ-(EO)_{y}-H | 6 (PT) | 6 (PT) | 5 (PT) |
| 2e | 40% Genapol EP 2584 Vergleich | RO-(PO)ₓ-(EO)_{y}-H R = lankettiger Alkohol (nicht erfindungsgemäß) | 6 (PT) | 5 (PT) | 4 (PT) |
| 3a | 40% Agnique KE 3552 Vergleich | n-Oct-O-(PO)ₓ(EO)_{y}-H | 6 (PT) | 3 (PT) | 3 (PT) |
| 3b | 30% Agnique KE 3552 Vergleich | n-Oct-O-(PO)ₓ-(EO)_{y}-H | 6 (PT) | 3 (PT) | 3 (PT) |
| 3c | 20% Agnique KE 3552 Vergleich | n-Oct-O-(PO)ₓ-(EO)_{y}-H | 6 (PT) | 3 (PT) | 3 (PT) |
| 4 | 40% Emulgator KS Vergleich | [RCOO(EO)_{x/y/z}][CH( CH₂)₂] | 6 (PT) | 6 (PT) | 6 (PT) |

| | | | | | |
|---|---|---|---|---|---|
| * Benotungsskala 1 - 6, d.h. 1 = sehr gut, 6 = ungenügend; PT = Phasentrennung; RT = Raumtemperatur (20 °C), x, y, z, n, m sind ganze Zahlen ≥ 2. | | | | | |

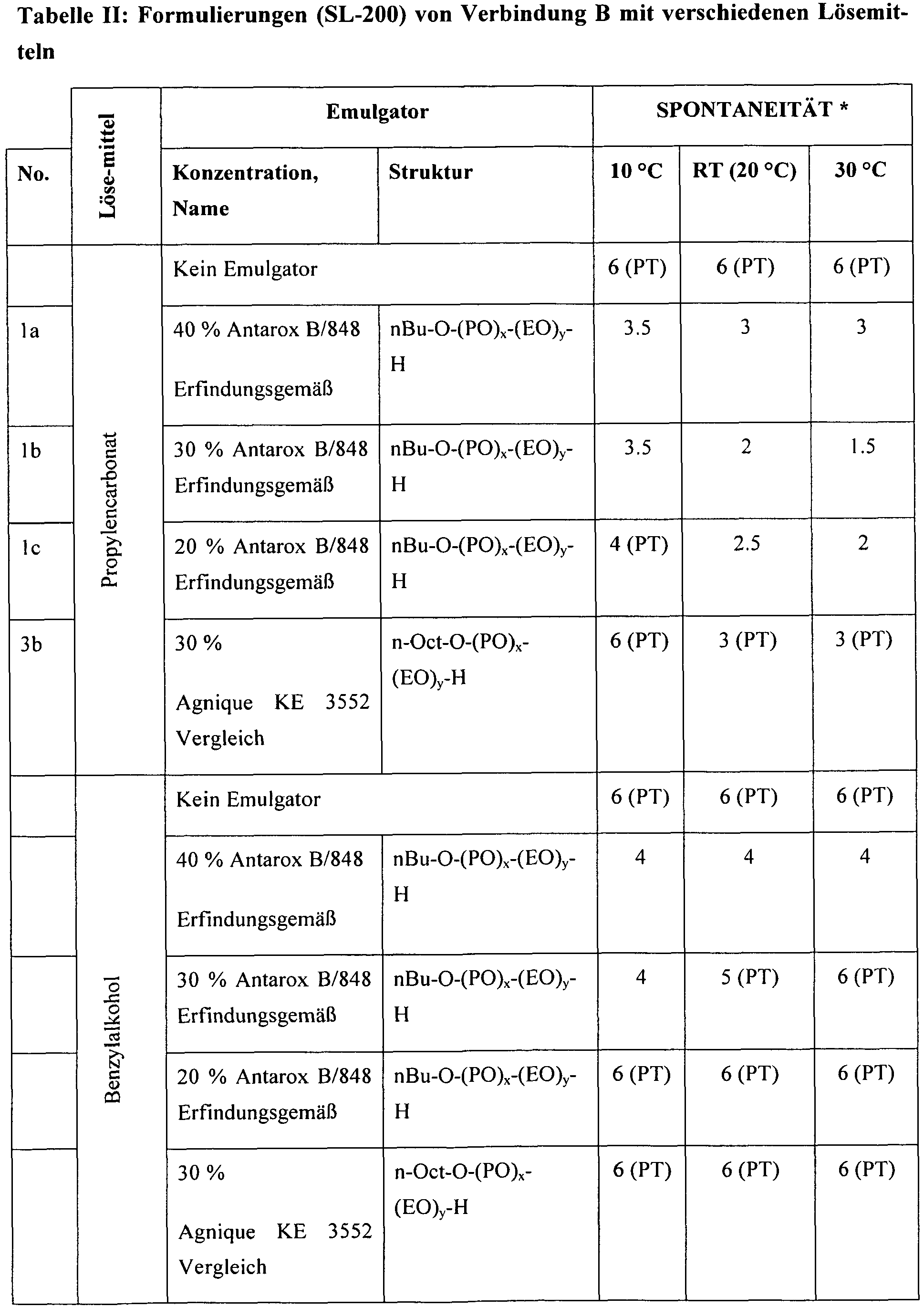

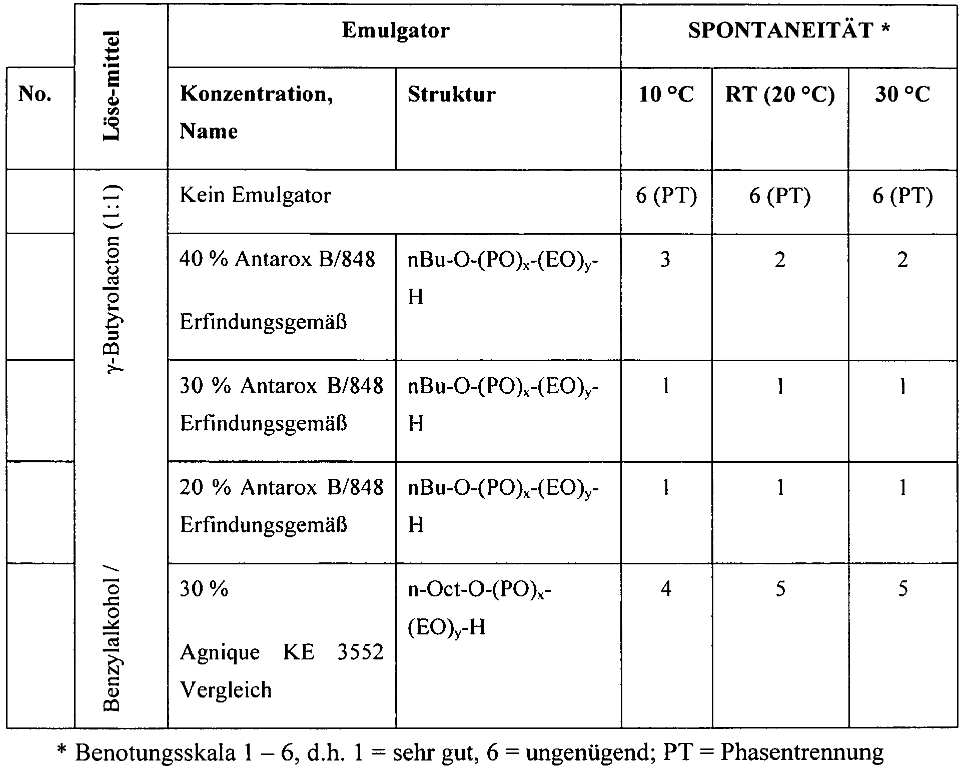

**Tabelle III: Acetamiprid-Formulierung mit Benzylalkohol als Lösemittel**

| | **Emulgator** | | **SPONTANEITÄT *** | | |
|---|---|---|---|---|---|
| **No.** | **Name** | **Struktur** | **10 °C** | **RT (20 °C)** | **30 °C** |
| | 30 % Antarox B/848 | nBu-O-(PO)ₓ-(EO)_{y}-H | 2 (klar) | 2 (klar) | 2 (klar) |

**Tabelle IV: Flonicamid-Formulierungen mit NMP als Lösemittel**

| | **Emulgator** | | **SPONTANEITÄT** * | | |
|---|---|---|---|---|---|
| **No.** | **Name** | **Struktur** | **10 °C** | **RT (20 °C)** | **30 °C** |
| | 30 % Agnique 3551 Vergleich | Et-Hex-O-(PO)ₓ-(EO)_{y}-H | | 2.5 (trüb) | |
| | 30 % Antarox B/848 Erfindungsgemäß | nBu-O-(PO)ₓ-(EO)_{y}-H | | 2 (klar) | |
| | 30 % Antarox B/500 Erfindungsgemäß | nBu-O-(PO)ₓ-(EO)_{y}-H | | 2 (klar) | |

**Tabelle V: Sulfoxaflor-Formulierungen mit Dimethylimidazolinon (DMI) als Lösemittel**

| | **Emulgator** | | **SPONTANEITÄT *** | | |
|---|---|---|---|---|---|
| **No.** | **Name** | **Struktur** | **10 °C** | **RT (20 °C)** | **30 °C** |
| | 30 % Agnique 3551 Vergleich | Et-Hex-O-(PO)ₓ-(EO)_{y}-H | | 2.5 (trüb) | |
| | 30 % Antarox B/848 Erfindungsgemäß | nBu-O-(PO)ₓ-(EO)_{y}-H | | 2 (klar) | |

**Tabelle VI: Formulierungen der Verbindung A mit Propylencarbonat als Lösemittel**

| | **Emulgator** | | **SPONTANEITÄT *** | | |
|---|---|---|---|---|---|
| **No.** | **Name** | **Struktur** | **10 °C** | **RT (20 °C)** | **30 °C** |
| | 30 % Agnique 3551 Vergleich | Et-Hex-O-(PO)ₓ-(EO)_{y}-H | | 3.5 (PT) | |
| | 30 % Antarox B/848 Erfindungsgemäß | nBu-O-(PO)ₓ-(EO)_{y}-H | | 2.5 | |
| | 20 % Antarox B/848 Erfindungsgemäß | nBu-O-(PO)ₓ-(EO)_{y}-H | | 3 | |

### Verwendungsbeispiel II

### Bestimmung der Penetrationseigenschaften einer Formulierung gemäß obiger Rezeptur.

In diesem Test wird die Penetration von Wirkstoffen (a.i.) durch enzymatisch isolierte Kutikeln von Apfelbaumblättern gemessen.

Verwendet werden Blätter, die in voll entwickeltem Zustand von Apfelbäumen der Sorte Golden Delicious abgeschnitten werden. Die Isolierung der Kutikeln erfolgt in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt werden,
- dann Natriumazid hinzugefügt wird und
- die so behandelten Blattscheiben bis zur Auflösung der ursprünglichen Blattstruktur und zur Ablösung der nicht zellulären Kutikula stehen gelassen werden.

Danach werden nur die von Spaltöffnungen und Haaren freien Kutikeln der Blattoberseiten weiter verwendet. Sie werden mehrfach abwechselnd mit Wasser und einer Pufferlösung, pH-Wert 7, gewaschen. Die erhaltenen sauberen Kutikeln werden schließlich auf Teflonplättchen aufgezogen und mit einem schwachen Luftstrahl geglättet und getrocknet.

Im nächsten Schritt werden die so gewonnenen Kutikularmembranen für Membran-Transport-Untersuchungen in Diffusionszellen (=Transportkammern) aus Edelstahl eingelegt. Dazu werden die Kutikeln mit einer Pinzette mittig auf die mit Silikonfett bestrichenen Ränder der Diffusionszellen platziert und mit einem ebenfalls gefetteten Ring verschlossen. Die Anordnung ist so gewählt, dass die morphologische Außenseite der Kutikeln nach außen, also zur Luft, gerichtet ist, während die ursprüngliche Innenseite dem Inneren der Diffusionszelle zugewandt ist. Die Diffusionszellen sind mit Wasser bzw. mit einem Gemisch aus Wasser und Lösungsmittel gefüllt.

Zur Bestimmung der Penetration werden jeweils 5 µl einer Wirkstoff enthaltende Applikationsbrühe der nachstehend genannten Formulierungen auf die Außenseite einer Kutikula appliziert. Die Wirkstoffkonzentration entspricht der praxisüblichen Feldapplikationsrate.

In den Applikationsbrühen wird jeweils Leitungswasser verwendet.

Nach dem Auftragen der Applikationsbrühen lässt man jeweils das Wasser verdunsten, dreht dann die Kammern um und stellt sie in thermostatisierte Wannen, wobei auf die Außenseite der Kutiku-la jeweils Luft einer definierten Luftfeuchte und Temperatur geblasen wird. Die einsetzende Penetration findet daher bei einer relativen Luftfeuchtigkeit von 60 % und einer eingestellten Temperatur von 25 °C statt. In regelmäßigen Abständen werden mit einem Autosampler Proben entnommen und der Gehalt an penetriertem Wirkstoff gemessen.

Die Versuchsergebnisse mit verschiedenen Wirkstoffen geht aus folgenden Beispielen hervor. Bei den angegebenen Zahlen handelt es sich um Durchschnittswerte von jeweils 10 Einzelmessungen.

### Beispiel I: Penetration von Acetamiprid (0,5 g a.i./L) durch Apfelblattkutikeln

| Applikationsbrühe | Penetration nach 24h (in %) |
|---|---|
| a.i. in Wasser | 61 |
| a.i. in Wasser & Antarox B/848 | 100 |
| a.i. in Wasser & Antarox B/500 | 100 |
| Vergleich 1: a.i. in Wasser & Emulgator W (styreniertes α-Phenyl-ω-hydroxyl-polyoxyethan-1,2-diyl, CAS 104376-72-9) | 82 |

### Beispiel II: Penetration von Verbindung A (0,5 g a.i./L) durch Apfelblattkutikeln

| Applikationsbrühe | Penetration nach 24h (in %) |
|---|---|
| a.i. in Wasser | 2 |
| a.i. in Wasser & Antarox B/848 | 49 |
| Vergleich 1: a.i. in Wasser & Emulgator W (styreniertes α-Phenyl-ω-hydroxyl-polyoxyethan-1,2-diyl, CAS 104376-72-9) | 7 |

### Beispiel III: Penetration von Verbindung B (0,3 g a.i./L) durch Apfelblattkutikeln

| Applikationsbrühe | Penetration nach 24h (in %) |
|---|---|
| Labor-EC & Antarox B/848, 0,3g/L | 23 |
| Labor-EC & Antarox B/848, 0,6g/L | 64 |
| Vergleich 1: Wässrige Applikationsbrühe, bestehend aus 0,5 g/L Wirkstoff BYI 02960, 0,5 g/L Emulgator W (styreniertes α-Phenyl-ω-hydroxyl-polyoxyethan-1,2-diyl, CAS 104376-72-9) sowie 20 g/L Dimethylacetamid. | 18 |

### Beispiel IV: Penetration von adjuvantierten SL-Formulierungen der Verbindung B (0,3 g a.i./L) durch Apfelblattkutikeln

| Spritzbrühe | Penetration nach 24h (in %) |
|---|---|
| SL 200 (2008-000189) mit Antarox B/848 (40%) | 72 |
| Vergleich: SL 300 (ohne Adjuvants) | 10 |

Im Vergleichsbeispiel wurde mehr Wirkstoff als in der erfindungsgemäßen Spritzbrühe verwendet, so dass bei dem Vergleichsbeispiel eigentlich von einer erhöhten Penetration auszugehen gewesen wäre.

### Beispiel V: Penetration von Verbindung B (0,5g a.i./L) durch Apfelblattkutikeln

| Spritzbrühe | Penetration nach 24 h (in %) |
|---|---|
| a.i. in Wasser | 4 |
| a.i. in Wasser & Antarox B/848, 1g/L | 48 |
| a.i. in Wasser & Antarox B/500, 1g/L | 52 |
| Vergleich 1: | |
| a.i. in Wasser & Emulgator W, 1g/L | 13 |

### Verwendungsbeispiele III

### Bestimmung der Retention von Spritzbrühen

Unter Retention versteht man die Sprühnebelhaftung an Oberflächen, z.B. Pflanzen oder Pflanzenteilen (Blätter) nach Spritzapplikation. Die Retention hängt sowohl von der Zusammensetzung der Spritzbrühe als auch von der Beschaffenheit der behandelten Oberfläche ab.

Standardmäßig wird die Retention einer Spritzbrühe mit einem schlecht benetzbaren Blatt im Vergleich zu einer Bezugsoberfläche mit 100%er Retention ermittelt. Die berichteten Ergebnisse wurden mit Primärblättern von Gerstenkeimlingen erzielt, die im Gewächshaus (18 °C, 80 % Luftfeuchte, 16 h Licht) angezogen wurden.

Einzelne abgeschnittene Blätter werden in einer Spritzkabine standardmäßig mit einem Spritzschlitten behandelt - Düse: XR 11002 VS; Druck: 3 bar; 300l/ha. Gewicht und Blattfläche werden vor der Behandlung bestimmt und der anhaftende Spritzbelag entsprechend gravimetrisch bestimmt und auf die Blattfläche normiert. Als Bezugsoberfläche für 100 % Retention dient Fliespapier mit einer genau bekannten Fläche.

Mindestens 5, besser 8 - 10 einzelne Blätter werden pro Spritzbrühenvariante behandelt und die berechneten Retentionen anschließend gemittelt. In der Regel wird als Negativ-Kontrolle (geringste Retention) eine Testserie mit reinem Leitungswasser durchgeführt.

In einem solchen Vergleichstest lieferten Spritzbrühen mit dem Additiv Antarox B/848 (Fa. Rhodia, chemische Struktur n-Bu-O-(PO)ₓ-(EO)_{y}-H) bzw. Agnique 3551 (Fa. Cognis, chemische Struktur 2-Ethyl-Hexyl-O-(PO)ₓ-(EO)_{y}-H) bzw. Agnique KE 3552 (Fa. Cognis, chemische Struktur n-Oct-O-(PO)ₓ-(EO)_{y}-H) jeweils ausgezeichnete und innerhalb der Methodenpräzision gleichwertige Retentionswerte.

Diese Versuchsreihe III belegt, dass trotz verbesserte Penetration und verbesserter Spontaneität weitere Eigenschaften, insbesondere die Retention, nicht nachteilig verändert wird.

### Verwendungsbeispiele IV

### Vergleich der biologischen Wirkung

### Translaminare Wirkung von Verbindung B gegen Myzus persicae auf Kohlblättern

Kohlpflanzen werden mit einer gemischten Population der Grünen Pfirsichblattlaus (Myzus persicae) infiziert. Wenn die Blattläuse die Blattunterseite besiedelt haben, werden die Pflanzen mit den in der Tabelle genannten Substanzen mittels Balkenspritze so besprüht, dass nur die Blattoberseite mit Insektizid versehen ist (Wasservolumen: 300 L / ha). Die translaminare Wirksamkeit der Behandlung gegen eine gemischte Population der Grünen Pfirsichblattlaus in % Mortalität wurde zu den angegebenen Zeitpunkten bestimmt:

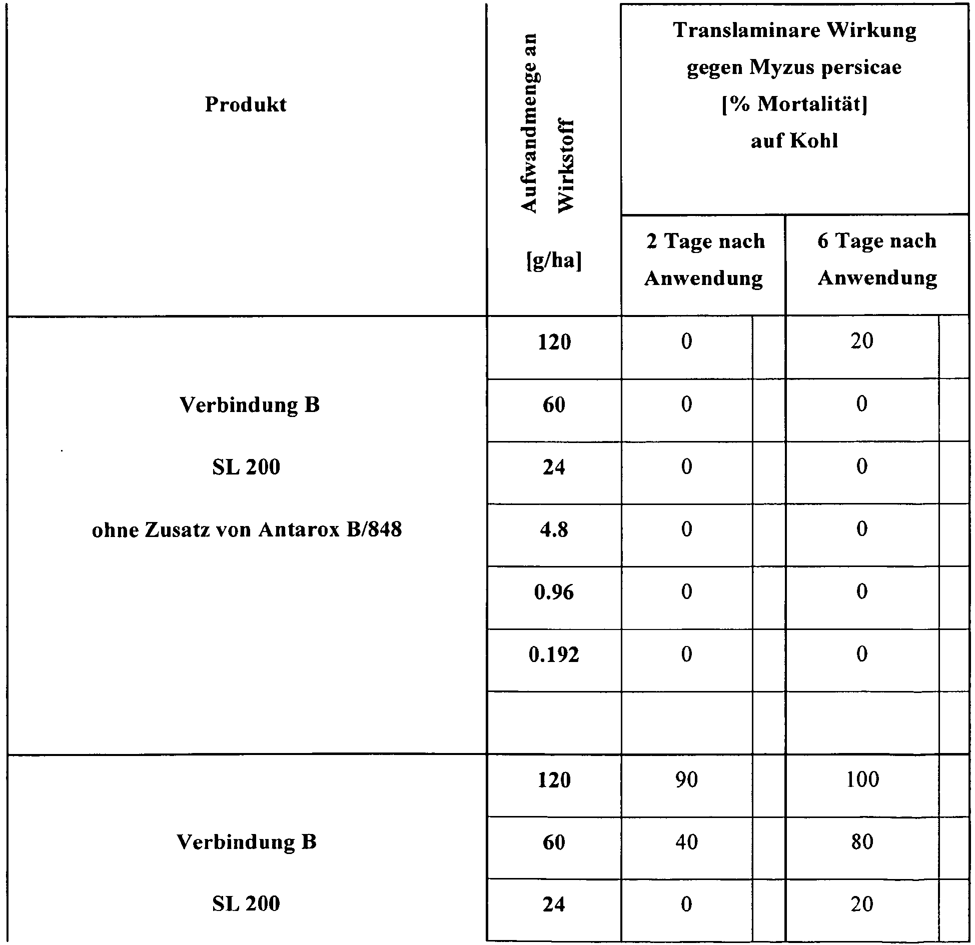

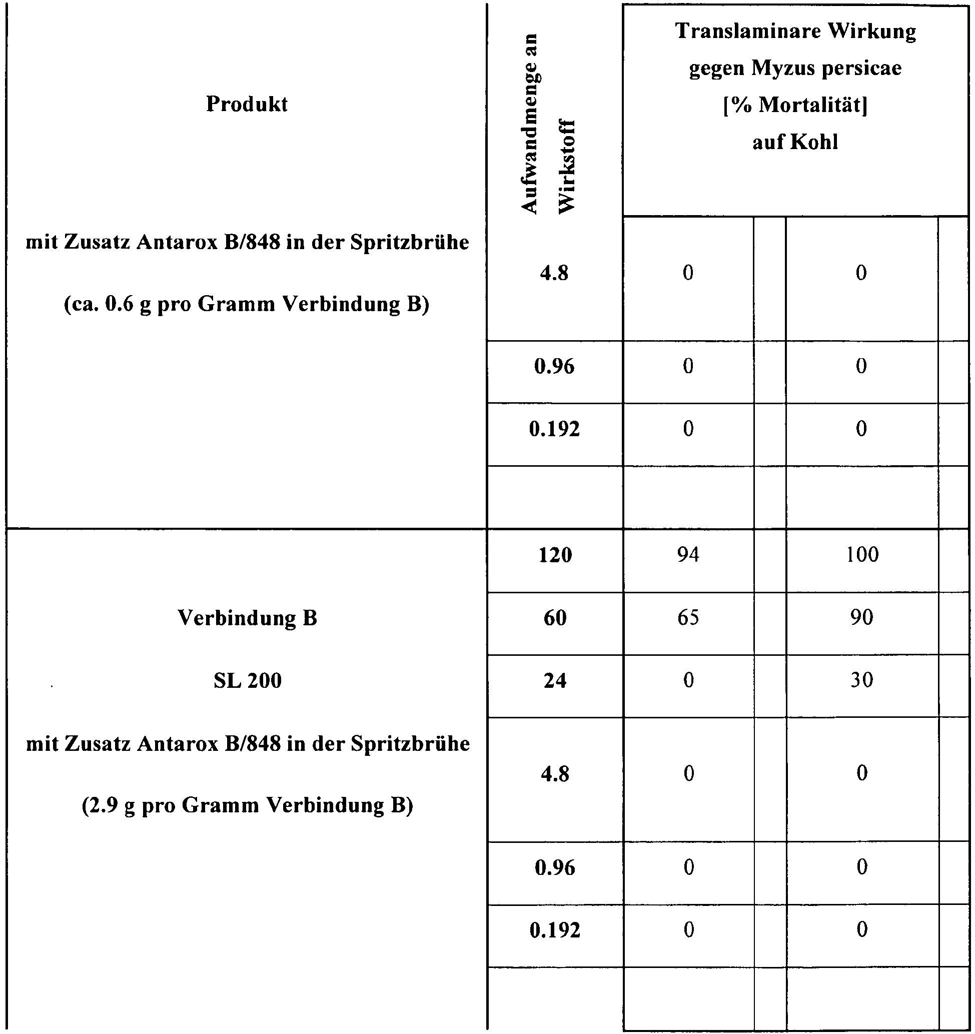

## Patentansprüche

1. Zusammensetzung, umfassend mindestens einen Wirkstoff ausgewählt aus der Gruppe bestehend aus Verbindung B und Verbindung A und mindestens eine Alkylpolypropylenglycolpolyethylenglycol-Verbindung der allgemeinen Formel (I)
R-O-(CₘH₂ₘO)ₓ-(CₙH₂ₙO)_{y}-R' (I)
in welchen die einzelnen Reste und Indizes die folgenden Bedeutungen aufweisen:
R und R' unabhängig voneinander für Wasserstoff, einen linearen C₁- bis C₅-Alkylrest oder einen verzweigten C₃- oder C₄-Alkylrest stehen;
m gleich 2 oder 3 ist;
n gleich 2 oder 3 ist;
x gleich 5 bis 150 ist und
y gleich 5 bis 150 ist,
wobei ein Rest n oder m die Bedeutung 2 und der andere Rest n oder m die Bedeutung 3 aufweist und wobei Verbindung B die Formel 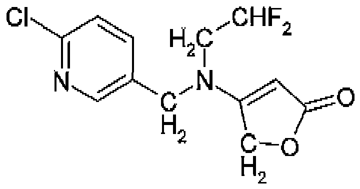 und Verbindung A die Formel 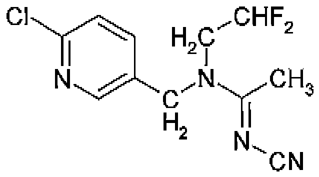 aufweist.

2. Zusammensetzung nach Anspruch 1, **dadurch gekennzeichnet, dass** die Reste R und R' unabhängig voneinander ausgewählt sind aus der Gruppe, bestehend aus einem Methylrest, einem n-Butylrest und Wasserstoff.

3. Zusammensetzung nach Anspruch 1 oder 2, **dadurch gekennzeichnet, dass** die Reste R und R' unabhängig voneinander ausgewählt aus der Gruppe, bestehend aus einem n-Butylrest und Wasserstoff.

4. Zusammensetzung nach einem der Ansprüche 1 bis 3, **dadurch gekennzeichnet, dass** in der Alkylpolypropylenglycolpolyethylenglycol-Verbindung der Formel (I)
m 3 ist,
n 2 ist,
x für 5 bis 80 steht,
y für 5 bis 80 steht, R n-Butyl oder Wasserstoff und
R' Wasserstoff ist.

5. Zusammensetzung nach einem der Anspruche 1 bis 4, **dadurch gekennzeichnet, dass** sie weiterhin als agrochemischen Wirkstoff Imidacloprid, Nitenpyram, Acetamiprid, Thiacloprid, Thiamethoxam, Clothianidin, Dinotefuran, Sulfoxaflor und / oder Flonicamid umfasst.

6. Zusammensetzung nach einem der Ansprüche 1 bis 5, **dadurch gekennzeichnet, dass** die Zusammensetzung 0,1 und 80 Gew.-% an Alkylpolypropylenglycolpolyethylenglycol-Verbindung der allgemeinen Formel (I), bezogen auf die Zusammensetzung, umfasst.

7. Zusammensetzung nach einem der Ansprüche 1 bis 6 in der Form eines Konzentrats.

8. Verfahren zur Herstellung einer Zusammensetzung gemäß einem der Ansprüche 1 bis 7, **dadurch gekennzeichnet, dass** man die einzelnen Komponenten in den jeweils gewünschten Verhältnissen miteinander vermischt.

9. Verfahren nach Anspruch 8, **dadurch gekennzeichnet, dass** man einen agrochemischen Wirkstoff vorlegt und dann unter Rühren die übrigen Bestandteile in beliebiger Reihenfolge der Zusammensetzung hinzufügt.

10. Verwendung einer Zusammensetzung gemäß einem der Ansprüche 1 bis 7 im agrochemischen Bereich.

11. Verwendung nach Anspruch 10, **dadurch gekennzeichnet, dass** die Zusammensetzung zum Bekämpfen von Insekten und/oder Acarina verwendet wird.

12. Verwendung nach Anspruch 10 oder 11, wobei eine Zusammensetzung gemäß Anspruch 6 zunächst in eine Spritzbrühe überführt wird und die resultierende Spritzbrühe verwendet wird.

## Claims

1. Composition, comprising at least one active compound selected from the group consisting of compound B and compound A and at least one alkyl polypropylene glycol polyethylene glycol compound of the general formula (I)
R-O-(CₘH₂ₘO)ₓ-(CₙH₂ₙO)_{y}-R' (I)
in which the individual radicals and indices have the following meanings:
R and R' independently of one another represent hydrogen, a straight-chain C₁- to C₅-alkyl radical or a branched C₃- or C₄-alkyl radical;
m is 2 or 3;
n is 2 or 3;
x is from 5 to 150 and
y is from 5 to 150,
where one radical n or m has the meaning 2 and the other radical n or m has the meaning 3 and where compound B has the formula 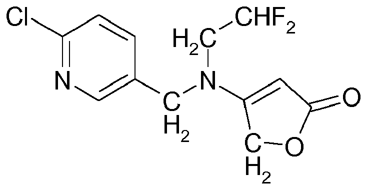 and compound A has the formula

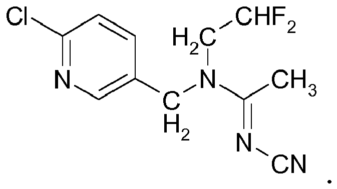

2. Composition according to Claim 1, **characterized in that** the radicals R and R' are independently of one another selected from the group consisting of a methyl radical, an n-butyl radical and hydrogen.

3. Composition according to Claim 1 or 2, **characterized in that** the radicals R and R' are independently of one another selected from the group consisting of an n-butyl radical and hydrogen.

4. Composition according to any of Claims 1 to 3, **characterized in that** in the alkyl polypropylene glycol polyethylene glycol compound of the formula (I)
m is 3,
n is 2,
x is from 5 to 80,
y is from 5 to 80,
R is n-butyl or hydrogen and
R' is hydrogen.

5. Composition according to any of Claims 1 to 4, **characterized in that** it furthermore comprises, as agrochemically active compound, imidacloprid, nitenpyram, acetamiprid, thiacloprid, thiamethoxam, clothianidin, dinotefuran, sulfoxaflor and/or flonicamid.

6. Composition according to any of Claims 1 to 5, **characterized in that** the composition comprises from 0.1 to 80% by weight of the alkyl polypropylene glycol polyethylene glycol compound of the general formula (I), based on the composition.

7. Composition according to any of Claims 1 to 6 in the form of a concentrate.

8. Process for preparing a composition according to any of Claims 1 to 7, **characterized in that** the individual components are mixed with one another in the respective desired ratios.

9. Process according to Claim 8, **characterized in that** an agrochemically active compound is initially charged and the other components are then added to the composition with stirring, in any order.

10. Use of a composition according to any of Claims 1 to 7 in the agrochemical field.

11. Use according to Claim 10, **characterized in that** the composition is used for controlling insects and/or Acarina.

12. Use according to Claim 10 or 11, where a composition according to Claim 6 is initially converted into a spray liquor and the resulting spray liquor is used.

## Revendications

1. Composition, comprenant au moins une substance active choisie dans le groupe constitué par le composé B et le composé A et au moins un composé d'alkylpolypropylèneglycolpolyéthylèneglycol de formule générale (I)
R-O-(CₘH₂ₘO)ₓ-(CₙH₂ₙO)_{y}-R' (I)
dans laquelle les différents radicaux et indices présentent les significations suivantes :
R et R' représentent, indépendamment l'un de l'autre, hydrogène, un radical C₁-C₅-alkyle linéaire ou un radical C₃- ou C₄-alkyle ramifié ;
m vaut 2 ou 3 ;
n vaut 2 ou 3 ;
x vaut 5 à 150 et
y vaut 5 à 150,
dans un radical, n ou m valant 2 et dans l'autre radical, n ou m valant 3 et le composé B présentant la formule 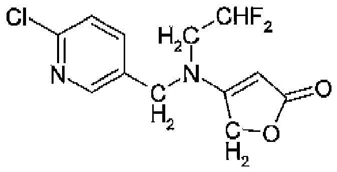 et le composé A présentant la formule

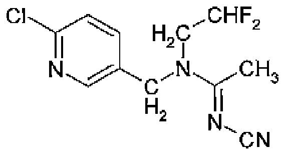

2. Composition selon la revendication 1, **caractérisée en ce que** les radicaux R et R', indépendamment l'un de l'autre, sont choisis dans le groupe constitué par un radical méthyle, un radical n-butyle et hydrogène.

3. Composition selon la revendication 1 ou 2, **caractérisée en ce que** les radicaux R et R', indépendamment l'un de l'autre, sont choisis dans le groupe constitué par un radical n-butyle et hydrogène.

4. Composition selon l'une quelconque des revendications 1 à 3, **caractérisée en ce que** dans le composé d'alkylpolypropylèneglycolpolyéthylèneglycol de formule (I)
m vaut 3,
n vaut 2,
x vaut 5 à 80,
y vaut 5 à 80,
R signifie n-butyle ou hydrogène et
R' représente hydrogène.

5. Composition selon l'une quelconque des revendications 1 à 4, **caractérisée en ce qu'**elle comprend en outre comme substance active agrochimique l'imidaclopride, le nitenpyram, l'acétamipride, le thiaclopride, le thiaméthoxame, la clothianidine, le dinotéfurane, le sulfoxaflor et/ou le flonicamide.

6. Composition selon l'une quelconque des revendications 1 à 5, **caractérisée en ce que** la composition comprend entre 0,1 et 80% en poids de composé d'alkylpolypropylèneglycolpolyéthylèneglycol de formule générale (I), par rapport à la composition.

7. Composition selon l'une quelconque des revendications 1 à 6 sous forme d'un concentrat.

8. Procédé pour la préparation d'une composition selon l'une quelconque des revendications 1 à 7, **caractérisé en ce qu'**on mélange les différents composants dans les rapports à chaque fois souhaités les uns avec les autres.

9. Procédé selon la revendication 8, **caractérisé en ce qu'**on dispose au préalable une substance active agrochimique et **en ce qu'**on ajoute, sous agitation, les autres constituants dans un ordre quelconque à la composition.

10. Utilisation d'une composition selon l'une quelconque des revendications 1 à 7 dans le domaine agrochimique.

11. Utilisation selon la revendication 10, **caractérisée en ce que** la composition est utilisée pour lutter contre des insectes et/ou des acariens.

12. Utilisation selon la revendication 10 ou 11, une composition selon la revendication 6 étant d'abord transformée en un bouillon de pulvérisation et le bouillon de pulvérisation résultant étant utilisé.
